(19) Europäisches Patentamt
European Patent Office
Office européen des brevets

(11) **EP 1 972 672 A2**

(12) **EUROPEAN PATENT APPLICATION**

(43) Date of publication:
**24.09.2008 Bulletin 2008/39**

(51) Int Cl.:
***C09D 167/00*** *(2006.01)*     ***C09D 163/00*** *(2006.01)*
***C09D 5/03*** *(2006.01)*

(21) Application number: **08250931.6**

(22) Date of filing: **18.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.03.2007 US 918815 P**

(71) Applicant: **Rohm and Haas Company**
**Philadelphia, PA 19106-2399 (US)**

(72) Inventors:
• **Cinoman, Douglas S.**
**Douglasville, Pennsylvania 19518 (US)**
• **Tullos, Gordon L.**
**Reading, Pennsylvania 19606 (US)**
• **Daly, Andrew T.**
**Sinking Spring, Pennsylvania 19608 (US)**

(74) Representative: **Kent, Venetia Katherine et al**
**Rohm and Haas Europe Services ApS - UK Branch**
**European Patent Department**
**4th Floor, 22 Tudor Street**
**London EC4Y 0AY (GB)**

(54) **Thermosetting powders comprising curing agent adducts of polyesters and strong, flexible powder coatings made therefrom**

(57)     The present invention provides thermosetting polyester powder or epoxy-containing acrylic powder compositions comprising one or more curing agent adduct of a polyester, preferably a linear polyester, wherein when the said curing agent adduct comprises an adduct of one or more polyepoxy compound, the said polyepoxy compound has an average of 2.01 or more epoxy groups per molecule. The compositions provide flexible coatings, films and capstocks having improved impact resistance, especially for use in automotive and architectural applications. To improve impact strength of coatings and films provided thereby, the compositions comprise curing agent adducts of one or more polyepoxy compound chosen from triglycidyl isocyanurate (TGIC) and triglycidyl trimellitate with a carboxyl functional polyester having a carboxyl equivalent weight of 602 or more. In addition, to further improve the impact strength of coatings and films provided thereby, the compositions may comprise one or more adjunct curing agent, such as glycoluril, an aminoplast resin or a blocked isocyanate.

EP 1 972 672 A2

**Description**

The present invention relates to thermosetting powder compositions comprising curing agent adducts of polyesters and flexible powder coatings made therefrom. More particularly, it relates to powder compositions comprising thermosetting polyester powders or epoxy-containing acrylic powders and one or more curing agent adduct of a polyester, preferably a linear polyester, wherein when the curing agent adduct comprises an adduct of a polyepoxy compound, the polyepoxy compound has an average of 2.01 or more epoxy groups per molecule, as well as the automotive and architechural coatings and films made therefrom which are flexible and exhibit a desirable impact resistance.

Polyester resins and polyester hybrids are used extensively in commerce because they provide low cost alternatives for use in weatherable or functional coating powders when compared to their fluoropolymer, acrylic, urethane and, in some cases, even epoxy coating powder counterparts; however, the flexibility of coatings made from polyester coating powders leaves much to be desired in comparison to more coatings made from expensive counterparts. Further, attempts to improve the flexibility of coatings made from polyester and polyester hybrid coating powders have resulted in coatings having inadequate to poor impact resistance. Thus, while known coating powders comprising polyesters made from isophthalic acid can provide coatings having improved weathering properties, such polyesters in pigmented powder coating applications provide coatings suffering from reduced impact resistance and flexibility. Further, coatings made from known polyester clear coating powders manifest inadequate flexibility properties. Such coatings exhibit minute crack formation or craze cracking when subjected to the stress of bending or thermal cycling, which results in an objectionable milky appearance.

Polyester hybrid coatings, such as polyester-epoxy hybrids have had limited success in marrying the chemical resistance of epoxy with the relatively better weatherability of a polyester. The chemical resistance of functional polyester epoxy powder coatings, e.g. pipe coatings, has resulted from increasing the crosslinking density of the coating, thereby detracting from coating flexibility.

Flexibility problems also persist in coatings made from more expensive acrylic coating powders. Even the hard, smooth, chemically resistant, and weatherable clear coatings prepared from epoxy-functional acrylics, such as those from acrylic copolymers containing glycidyl methacrylate, can exhibit poor flexibility and poor impact strength.

U.S. Patent no.6,022,927, to Decker et al., discloses acrylic coating powders comprising adducts prepared by reacting a polyepoxy compound or a poly(beta-hydroxyalkyl amide) and a carboxylic acid-functional polyester. Decker et al. do not disclose compositions of polyester and polyester hybrid powder systems and do not address the flexibility and impact strength drawbacks of any of these systems. Further, Decker et al. do not disclose epoxy-functional acrylics having improved flexibility without detracting from impact strength.

Accordingly, the present inventors have endeavored to solve the problem of providing coating powders that enable one to make flexible powder coatings without sacrificing impact strength or impact resistance; and, in the same vein, the present inventors seek to improve, the craze cracking resistance of clear coatings made from polyester coating powders.

<u>STATEMENT OF THE INVENTION</u>

The present invention provides powder compositions of one or more thermosetting polyester powder or epoxy-containing acrylic powder comprising one or more curing agent adduct of a polyester, preferably a linear polyester, wherein when the curing agent adduct comprises an adduct of a polyepoxy compound, the polyepoxy compound has an average of 2.01 or more epoxy groups per molecule, or, preferably, 2.5 or more. To provide improved impact resistance, the curing agent adduct of a polyester may comprise the adduct of one or more curing agent, such as a polyepoxy compound chosen from triglycidyl isocyanurate (TGIC) and triglycidyl trimellitate, with one or more carboxyl functional polyester having a carboxyl equivalent weight of 602 or more. To provide powder coatings, films and capstocks having improved impact resistance and flexibility, the powder compositions may further comprise one or more adjunct curing agent for polyester, such as glycoluril, a uretdione or a blocked polyisocyanate.

The polyester used to make the adduct comprises the adduct of a polyol and a polyacid, preferably a linear polyol and a linear polyacid, e.g. a dicarboxylic acid, anhydride or acid halide, such as a $C_4$ to $C_{12}$ dicarboxylic acid.

The one or more thermosetting polyester may be chosen from a polyester, polyester acrylic hybrid, polyester epoxy hybrid, and mixtures thereof. Preferably, the one or more thermosetting polyester comprises a weatherable polyester, such as a polyester that comprises the reaction product of one or more polyacid comprising isophthalic acid (IPA) and one or more polyol.

The flexible powder coatings and films of the present invention, may comprise, respectively, coatings and films on metal, metal alloy, plastic, glass, paper(board) and wood substrates. The capstocks of the present invention may comprise capped thermoplastic or thermosetting resin articles and composites, such as molded, e.g. sheet molded composite, laminated or cast articles.

The present inventors have discovered that coatings, films and capstocks made from a powder chosen from thermosetting polyester and epoxy-containing acrylic and further comprising one or more adduct of a polyester with a curing agent will exhibit improved flexibility without losing their impact resistance or impact strength. The compositions comprise one or more polyester adduct of any of a broad variety of curing agents, thus enabling a broad variety of powder formulations. Preferably, a linear polyester is used to make the adduct. The impact resistance or strength can be further improved by adding a curing agent for polyester or acrylic resins, referred to herein as an "adjunct curing agent", for example, a curing agent reactive with carboxyl or anhydride groups.

To provide improved impact resistance or strength, the powder compositions for making a coating, film or capstock may comprise one or more adduct of one or more polyepoxy compound having an average of 2.01 or more epoxy groups per molecule with one or more carboxyl functional polyester having a carboxyl equivalent weight of 602 or more. Preferably, the adduct is made by reacting a linear carboxyl functional polyester having a carboxyl equivalent weight of 602 or more with a polyepoxy compound chosen from triglycidyl isocyanurate (TGIC) and triglycidyl trimellitate. Such compositions provide coatings, capstocks and films of a desirable appearance, especially when the curing agent adduct comprises the reaction product of a curing agent and a linear semicrystalline polyester.

All phrases comprising parenthesis denote either or both of the included parenthetical matter and its absence. For example, the phrase "(co)polymer" includes, in the alternative, polymer, copolymer and mixtures thereof and the term "(meth)acrylic" means acrylic, methacrylic, and mixtures thereof.

Unless otherwise noted, all processes refer to and all examples were performed under conditions of standard temperature and pressure (STP).

All ranges cited herein are inclusive and combinable. For example, if one or more pigment or colorant may be present in amounts of 200 phr or less, and in amount of 0.0005 phr or more, preferably, in amounts of 120 phr or less, or, preferably in amounts of 80 phr or less, then that ingredient may be present in amounts of from 0.0005 to 200 phr, from 0.0005 to 120 phr, and from 0.0005 to 80 phr.

As used herein, unless otherwise indicated, the term "acid number" shall mean the quantity determined by the following equation:

$$\text{AN} = (\text{Number equivalents excess acid used to make the polymer}) \times (56.1 \text{ g/eq. KOH}) \times (1000 \text{ mg KOH/g KOH}) / (\text{Number of grams polymer}),$$

wherein the acid equivalents are the total of carboxylic acid equivalents present.

As used herein, the term "aliphatic polyester" shall mean any polyester made from only aliphatic monomers, e.g. adipic acid and NPG.

As used herein, the term "aromatic polyester" shall mean a polyester made from at least one aromatic monomer, e.g. isophthalic acid (IPA).

As used herein, the term "average number of epoxy groups per molecule" shall mean the weighted average of epoxy or glycidyl groups in a mixture of polyepoxy compounds, based on the formulae of those compounds, and shall mean the formula number of epoxy groups in a given polyepoxy compound when it is used alone. For example, a diglycidyl ether of bisphenol A has an average number of 2.0 epoxy groups per molecule; and, a 50:50 w/w mixture of a diglycidyl ether of bisphenol A and triglycidyl trimellitate has an average number of 2.5 epoxy groups per molecule.

As used herein, the term "average particle size" shall mean, unless otherwise indicated, the particle diameter or the largest dimension of a particle in a distribution of particles as determined by laser light scattering using a Malvern Mastersizer™ 2000 instrument (Malvern Instruments Inc., Southboro, MA) per manufacturer's recommended procedures.

As used herein, the phrase "coating powder" refers to a powder coating composition and the phrase "powder coating" refers to a coating formed from a powder coating composition.

As used herein, the term "copolymer" shall mean any polymer made from two or more different monomers. For example, each of polyester made from a dicarboxylic acid, a diol and maleic acid and a polyester made from a dicarboxylic acid and a diol is a copolymer.

As used herein, the term "polyester" or "polyester resin" will include a polyester or a "polyester hybrid". The term "polyester hybrid" shall refes to adducts, grafts or block copolymers and compatible or compatibilized blends of polyesters, such as epoxy polyester hybrids and acrylic polyester hybrids.

As used herein, unless otherwise indicated, the term "glass transition temperature" or "$T_g$" of any resin or (co)polymer is measured using differential scanning calorimetry (DSC) (rate of heating of 20°C. per minute), the $T_g$ being taken at the midpoint of the inflection. $T_g$ may alternatively be calculated as described by Fox in *Bull. Amer. Physics. Soc.*, 1, 3, page 123 (1956).

As used herein, the term "hydroxyl number" means the the mg of KOH required to neutralize 1 g of polyester, and can be calculated or measured as is known in the art.

As used herein, unless otherwise indicated, the phrase "per hundred parts resin" or "phr" means the amount, by weight, of an ingredient per hundred parts, by weight, based on the total amount of resin, reactant monomer, and (co)polymer contained in a composition, including cross-linking agents, curing agents and any reactive additive, such as a curing agent adduct of a polyester.

As used herein, the term "polyacid" means any organic compound having two or more carboxylic acid groups or its anhydride, such as, for example, dicarboxylic acids. As used herein, the term "linear polyacid" refers to linear dicarboxylic acids and linear dicarboxylic functional polyesters and oligoesters.

As used herein, the term "polyol" means any organic compound having two or more hydroxyl or active hydrogen groups, such as, for example, diols and triols. As used herein, the term "linear polyol" refers to linear diols and linear difunctional polyols, e.g. polyglycols.

As used herein, the term "polymer" includes polymers that are the reaction product of any number of different monomers, such as terpolymers, and tetra polymers, and, further, includes random, block, segmented and graft copolymers, and any mixture or combination thereof.

As used herein, the term "product" refers to coatings, films, multilayer articles, coated substrates and capstocks.

As used herein, the terms "resin" and "polymer" are interchangeable.

As used herein, the term "crystalline polyesters" or "semicrystalline polyesters" shall mean any which exhibit a single sharp melting point ranging from 50-160°C, as measured by differential scanning calorimetry (DSC). Crystallinity may be increased by the selection of a homogeneous monomer mix, such as, for example, a single diol and a single dicarboxylic acid, or by the use of aliphatic monomers, such as a mixture of 1,6-hexanediol and adipic acid.

As used herein, the term "wt.%" refers to weight %.

The curing agent adducts of the present invention comprise the reaction product of one or more polyester and one or more curing agent, the polyester preferably being linear. The polyester is the reaction product of one or more polyol and one or more polyacid.

Suitable polyesters used to form the curing agent adducts of the present invention may be either amorphous or semicrystalline, preferably linear semicrystalline polyesters or blends of linear semicrystalline and linear amorphous polyesters. The improved flow of semicrystalline polyesters, as compared with amorphous polyesters, enables one to use higher molecular weight polyesters to make curing agent adducts, thereby providing coatings, capstocks and films having higher impact resistance. The polyester is carboxylic or anhydride functional, and has a carboxylic equivalent weight of from 300 to 10,000, preferably 602 or more or, preferably, up to and including 3,000, but may also be a polyester which has been modified to affix other functional groups, such as amino or thiol groups, by which it may be adducted to the curing agent. The carboxylic equivalent weight of the polyester should be limited to ensure ease of handling because the higher carboxylic equivalent weight polyesters are rubbery and may need to be shredded or cryoground to make them into a suitable powder.

Semicrystalline polyesters useful in accordance with the invention are described, for example, in World Intellectual Property Publication no. WO 91/14745. Semicrystalline polyesters exhibit a heterogeneous morphology, i.e., crystalline and amorphous phases; and may be opaque at ambient temperatures. Specific examples of suitable semicrystalline polyesters are those having an onset of melt of from 45°C to 120°C, preferably from 55°C to 90°C, one or more $T_g$ values of 55°C or less, a melting point of from 50°C to 160°C, preferably 60°C to 130°C, an acid value of from 10 to 250 mg KOH per gram, and a hydroxy number of 11 mg KOH per gram or less, preferably 2 or less, and a number average molecular weight ranging from 600 to 20,000, preferably from 1000 to 3000. Preferably, the crystallinity of the polyester should range from 20 to 300 J/gm, preferably from 60 to 200 J/gm, as measured by differential scanning calorimetry (DSC).

The preferred linear polyesters used to make the adducts of the present invention may be the polycondensation reaction product of diols and glycols with dicarboxylic acids or their anhydrides, esters or acid chlorides, using an excess of acid over alcohol so as to form a polyester with an acid number of 10 or more, preferably from 10 to 250, and more preferably from 60 to 90, and with a hydroxyl number less than 11.

To provide the desired flexibility in a coating, film or capstock formed from the coating powder composition of the present invention, 90 wt.% or more, or, more preferably, 99 wt.% or more, of the polyols used to form the linear polyester are linear aliphatic diols and 90 wt.% or more, or, more preferably, 99 wt.% or more of the polycarboxylic acids used to form the polyester are linear aliphatic dicarboxylic acids. Minor amounts, e.g., up to 10 wt % of the polyol content and up to 10 wt % of the polycarboxylic acid content, may be other polyols and carboxylic acids, including trifunctional species and those containing cycloaliphatic, aromatic, and unsaturated groups. Accordingly, one or more branching agent, such as trimethyol propane, can be used to increase functionality and impact resistance of a polyester, thus forming a branched polyester. Branched polyesters are not preferred because their use may impair the flexibility of coatings, films and capstocks containing them.

Suitable polyol reactants for forming polyesters used to make the adduct may include, for example, 1, 2-ethanediol, 1,3-propanediol, 1,4-butanediol, diethylene glycol, 1,6-hexanediol, neopentyl glycol, 1,10-decanediol, 1-4-cyclohexanedimethanol, trimethylol-propane, 2-methyl-1,3-propanediol, hydrogenated bisphenol A or 2,2-(dicyclohex-

EP 1 972 672 A2

anol)propane, 2,2,4-trimethyl-1,3-pentanediol, 2-n-butyl-2-ethyl-1,3-propanediol, 3-hydroxy-2,2-dimethylpropyl 3-hydroxy-2, 2-dimethylpropanoate, and 1,12-dodecanediol, 2-methyl-2-hydroxymethyl-1,3-propanediol, and 2-ethyl-2-hydroxymethyl-1,3-propanediol. A $C_4$ to $C_{12}$ aliphatic diol, such as 1,4-butanediol, or a diethylene glycol is preferred or, more preferably, a $C_6$ to $C_{12}$ diol, is used, such as 1,6-hexanediol, or a $C_6$ to $C_{20}$ polyglycol, such as compounds of the formula $HO(CH_2CH_2O)_xH$, wherein x ranges from 3 to 10, and mixtures thereof.

Suitable polycarboxylic acid reactants for forming polyesters used to make the adduct may include, for example, succinic acid, adipic acid, azelaic acid, sebacic acid, 1,12-dodecanedioic acid, terephthalic acid, isophthalic acid, trimesic acid, tetrahydrophthalic acid, hexahydrophthalic acid, 1,4-cyclohexanedicarboxylic acid, trimellitic acid and naphthalene dicarboxylic acid. A $C_4$ to $C_{12}$ (cyclo)aliphatic dicarboxylic acid, anhydride or acid halide is preferred, such as adipic acid, or, more preferably, a $C_6$ to $C_{12}$ (cyclo)aliphatic dicarboxylic acid, anhydride or acid halide, is used, such as 1,12-dodecanedioic acid, adipic acid, sebacic acid, cyclohexane dicarboxylic acids, dihydrocyclohexene dicarboxylic acids, and mixtures thereof.

An example of a particularly suitable linear polyester is a copolymer of hexanediol and 1,12-dodecanedioic acid having a carboxyl equivalent weight of from 400 to 1200, preferably from 602 to 800. In particular, a suitable carboxylic acid-functional poly(hexanedioyl dodecanedioate) polyester has a carboxyl equivalent weight of from 735-740. Such polyesters may have onset of melt temperatures of 50°C to 60 °C.

Suitable curing agent reactants for making the curing agent adducts may comprise one or more polyepoxy compounds, such as epoxy resins, glycidyl esters of polyacids, epoxy-containing acrylates, and, in epoxy polyester hybrid compositions, adducts of epoxy and polyamines or imidazoles; as well as (poly) β-hydroxyalkylamides, and any suitable adjunct curing agents, such as $C_6$ to $C_{18}$ dicarboxylic acids or anhydrides.

Suitable polyepoxy compounds may comprise epoxy resins heterocyclic polyepoxides such as triglycidyl isocyanurate (TGIC); polyepoxides of aromatic polyols such as diglycidyl ethers of bisphenol A, bisphenol F, or tetrabromobisphenol A; cycloaliphatic polyepoxides; low equivalent weight epoxy-functional acrylic resins; polyepoxides of aliphatic polyols, such as the diglycidyl ether of any of 1,4-butanediol, (poly)ethylene glycol, propylene glycol, 1,3-butanediol, 1,6-hexanediol, neopentyl glycol, isopentyl glycol and 2,2, 4-trimethylpentane-1,3-diol, or the triglycidyl ether of any of trimethylolethane, trimethylolpropane (TMP), glycerol, or pentaerythritol; polyepoxides of amino-alcohols, such as the tri-glycidyl ether-amine of 4-amino phenol; phenolic epoxy resins, e.g. epoxy novolaks; epoxy adducts of polyamines, such as bisphenol (e.g. bisphenol A) epoxy adducts of an aliphatic, alicyclic or aromatic diamine, bisphenol epoxy adducts of imidazoles, such as bisphenol epoxy phenyl imidazole, and bisphenol epoxy adducts of guanidine or biguanides. Polyepoxy compounds may also include low molecular weight polymers and oligomers made from the reaction product of the above-named aromatic diols and their diglycidyl ethers. Cycloaliphatic polyepoxy compounds may include such compounds as 3', 4'-epoxy cyclohexylmethyl-3, 4-epoxycyclohexyl carboxylate and dicyclopentadiene dioxides.

Suitable glycidyl esters of polyacids may include, for example, glycidyl esters of aromatic or aliphatic polyacids, such as the diglycidyl ester of hexahydrophthalic acid, and diglycidyl esters of such polyacids as, for example, terephthalic acid, isophthalic acid, phthalic acid, methylterephthalic acid, adipic acid, sebacic acid, succinic acid, maleic acid, fumaric acid, tetrahydrophthalic acid, methyltetrahydrophthalic acid, hexahydrophthalic acid, and methylhexahydrophthalic acid; as well as triglycidyl ethers of polyacids such as citric acid, trimellitic acid, and pyromellitic acid. One suitable example of a glycidyl ester of polyacids is a blend comprising a triglycidyl trimellitate and a bis(2,3-epoxypropyl) terephthalate.

Suitable epoxy-containing acrylates may include, for example, any (co)polymer of epoxy-functional acrylates, e.g., glycidyl esters of (meth)acrylic acids, alone or in conjunction with other vinyl monomers, including other acrylic esters, styrene and substituted styrenes, and any monomers not having epoxy-reactive chemical groups, such as carboxylic acid and hydroxyl groups. Alternatively, an acrylic polymer having carboxylic acid functionality may be formed and epoxy-containing species subsequently grafted thereto. Glycidyl-containing acrylic polymers are also commercially available, e.g. resins commercially available as Almatex™ acrylic polymers from Anderson Development Co. For purposes of forming the curing agent adduct of the present invention, epoxy-functional acrylate polymers may have weight average molecular weights ranging from 300 to 2000 and epoxy equivalent weights ranging from 120 to 650, preferably from 120 to 400.

To insure improved impact resistance, the polyepoxy compounds used to make the curing agent adduct of the present invention preferably comprise compounds having an average of 2.01 or more epoxy groups per molecule, or, more preferably, 2.05 or more, or, even more preferably 2.5 or more. Examples of suitable polyexpoy compounds comprise one or more triglycidyl functional polyepoxy compound or mixtures thereof with one or more diglycidyl functional polyepoxy compound.

Suitable hydroxyalkylamide (HAA) curing agents may comprise β-hydroxyalkylamides, such as, for example, N,N,N',N'-tetrakis(2-hydroxyethyl)hexanediamide, N,N,N',N'-tetrakis(2-hydroxypropyl)hexanediamide, di(β-hydroxyethyl) propylamide, and di(β-hydroxyalkyl) $C_8$ to $C_{40}$ alkylamides. One suitable example of an HAA curing agent is N,N,N',N'-tetrakis(2-hydroxyethyl)hexanediamide, available as Primid™ XL-552 curing agent from EMS Chemie, Inc.

Other suitable curing agents for preparing the curing agent adducts of the present invention may include any one or more adjunct curing agent.

Suitable adjunct curing agents for use in the compositions of the present invention may include, for example, glycoluril; benzoguanamines; aminoplast resins, such as hexamethoxymethyl melamine (HMMM); polyisocyanates; blocked polyisocyanates, such as ε-caprolactone blocked polyisocyanates; dimers or trimers of a di- or tr-isocyanate, e.g. a uretdione or an isocyanurate of isophorone diisocyanate (IPDI) or hexamethylene diisocyanate (HMDI); and polyepoxy compounds. As used herein, the term "polyisocyanate" refers to compounds and resins having two or more isocyanate groups, such as, for example, diisocyanates or triisocyanates, dimers or trimers thereof, or polyisocyanate functional compounds chosen from oligourethanes, oligoesters, polyurethanes, polyesters, polyamines and polyols.

Suitable amounts of adjunct curing agent may range up to 20 phr in pigmented or opaque coating applications, or, to prevent excessive yellowing in clear or tinted clear coating applications, up to 10 phr. Preferably, the adjunct curing agent is present in the amount of 2 phr or more, or it may be present in the amount of 8 phr or less, or, more preferably, 5 phr or less.

The one or more thermosetting resin or polymer may be chosen from polyester, polyester acrylic hybrid, polyester epoxy hybrid, "epoxy-containing acrylic", such as, poly(glycidyl (meth)acrylate) (GMA) copolymers, mixtures, and hybrids thereof. Preferred polymers or resins may comprise one or more weatherable polyester, epoxy-polyester hybrid or polyester-acrylic hybrid. In an epoxy-polyester hybrid, the epoxy and polyester react with each other to cure.

Any suitable thermosetting resin or (co)polymer should have a $T_g$ of 40°C or more and up to 100°C, preferably 50°C or more, or, preferably, up to 70 °C, or more preferably, 55°C or more, or, preferably, up to 65°C.

Suitable thermosetting polyesters may include one or more than one carboxylic acid functional polyester resin. Suitable polyester resins may be linear or branched, and may be formed by the polymerization of polyols and polyacids, including any of the polyols or polyacids used to make the polyester of the adduct and, preferably, including one or more alicyclic or aromatic polyol and/or alicyclic or aromatic polyacid. Carboxylic acid functional polyesters may comprise the reaction product of one or more polyol with an excess of one or more aliphatic, alicyclic or aromatic polyacid. The $T_g$ of a suitable polyester may be increased by including aromatic polycarboxylic acids and their anhydrides. Suitable polyester resin chains may be relatively short, such that acid functional polyesters have acid numbers from 15 to 100, for example, from 25 to 60, and, preferably, from 30 to 50. Suitable polyester resins should have hydroxyl numbers of from 0 to 12, preferably, 5 or less.

Suitable polyols used to make the thermosetting polyesters of the present invention may include, for example, one or more $C_2$ to $C_{24}$ linear or branched diol. Preferably, to provide a weatherable polyester, the polyol used is neopentyl glycol (NPG). Preferably, to provide a non-blooming polyester, the polyol is 2-butyl, 2-ethyl, 1,3-propane diol (BEPD).

Suitable polyacids used to make the thermosetting polyesters of the present invention may include, for example, di- or higher functional carboxylic acids and their anhydrides, such as, for example, succinic acid, glutaric acid, adipic acid, pimelic acid, azelaic acid, sebacic acid, 1,12-dodecanedioic acid, hexahydrophthalic acid, tetrahydrophthalic acid, hexahydroisophthalic acid, and methylhexahydrophthalic acid, terephthalic acid, isophthalic acid (IPA), phthalic acid, 1,4-cyclohexanedicarboxylic acid, 1,3-cyclohexanedicarboxylic acid, naphthalene dicarboxylic acid, trimellitic acid, trimesic acid, pyromellitic acid and anhydrides thereof. Preferred polyacids may include IPA, phthalic acid, and mixtures thereof with one or more other polyacid. Isophthalic acid may provide polyesters having relatively high weatherability and tensile strength properties.

In a preferred embodiment, one or more thermosetting polyester is a weatherable, such as a polyester that is the reaction product of IPA and one or more polyol. Suitable weatherable polyesters may comprise, for example, the reaction product of from 15 to 90 mole % of IPA, from 5 to 30 mole %, for example from 15 to 30 mole %, of 1,4-cyclohexanedicarboxylic acid, with the remainder of acid, for example, 65 mole % or less, of terephthalic acid, based upon the total number of moles of acid present, and from 50 to 100 mole %, such as 70 to 100 mole %, of branched polyols having from 5 to 11 carbon atoms, such as NPG, based upon the total number of moles of polyols present, wherein at least 8 mole % of all reactants have a functionality of three or higher, such as trimethylolpropane, based upon the total number of moles of both acid and polyol present.

Epoxy polyester hybrid resins may include any suitable carboxyl functional polyester mixed or adducted with polyepoxides such as, condensed glycidyl ethers of (oligo)bisphenols, made by reacting bisphenol with halohydrins, polyglycidyl ethers and esters. Preferably, the epoxy resins consist of particles of one or more glycidyl ethers of (oligo) bisphenol A or F having a melt viscosity at 150°C of from 100 to 3500 centipoises (cps), preferably 200 to 2000 cps. Suitable polyester epoxy hybrid resins. Suitable proportions of epoxy resin in the epoxy polyester hybrid may range from 10 to 80 parts per hundred parts resin (phr), preferably, from 10 to 50 phr to enhance weathering in cured products.

Acrylic polyester hybrid resins may include any suitable polyester mixed or, preferably, adducted with carboxyl, isocyanate, amine, glycidyl, or hydroxyl functional acrylic copolymers of $C_1$ to $C_{18}$ alkyl (meth)acrylates, such as, for example, the copolymerization product of one or more $C_1$ to $C_{18}$ alkyl (meth)acrylate with, respectively, from 1 to 10 wt. %, based on the weight of all comonomers, of (meth)acrylic acid, isocyanate alkyl (meth)acrylates, aminoalkyl (meth) acrylates, glycidyl (meth)acrylate (GMA), or hydroxy alkyl (meth)acrylates, and copolymers of, e.g. with alkyl (meth) acrylates. Further, suitable polyester acrylic hybrid resins may comprise any suitable polyester mixed or adducted with any acrylate terminated urethane, polyester and epoxy oligomers and polymers. Suitable proportions of acrylic resin in the acrylic polyester hybrid may range from 10 to 80 parts per hundred parts resin (phr), preferably, from 10 to 50 phr to provide lower cost coatings having enhanced weathering properties.

In general, the one or more polymer or resin may be mixed with one or more curing agent and, optionally, one or more adjunct curing agent, such that the total stoichiometric ratio of one or more curing agent and one or more optional adjunct curing agent to the polymer or resin ranges from 0.66:1.0 to 1.5:1.0, or, preferably, 0.8:1.0 or more, or, preferably, 1.2:1.0 or less.

The powder compositions of the present invention may comprise additional ingredients, such as, for example, pigments or colorants, fillers, metallic flake pigments, matting agents, melt flow aids, leveling agents or degassing additives, light stabilizers, anti-corrosives, mold release agents and antioxidants.

One or more of each of pigments or colorants, e.g. titanium dioxide, carbon black, organic phthalocyanines, hollow sphere pigments or opaque polymers; and fillers, such as china clay, barytes, and large size fillers may be used in amounts of from 10 to 120 phr. Large size fillers, e.g. those having an average particle size of over 25 $\mu$m, such as diatomaceous earth, wollastonite or calcium carbonate, can be added to create a matte finish coating or a capstock.

In another embodiment, the powder compositions of the present invention comprise metallic flakes or effect pigments bonded or adhered to the polymer or resin to provide metal-look coatings and films, e.g. on and in consumer electronics items. Suitable metallic flakes may comprise aluminum flakes, i.e. aluminum bronze, including the thin "leafing" variety or thicker non-leafing variety. Other suitable metal flakes include, for example, nickel, bronze, zinc, stainless steel, copper, brass, alloys and mixtures thereof. Suitable effect pigments include, for example, metal oxide coated micas and interference pigments, for example, CHROMAFLAIR™ light interference pigments, from Flex Products, Inc., Santa Rosa, CA. The amount of the one or more metallic flake or effect pigments should range up to 20 phr or less, or 13.33 phr or less to limit the explosivity hazard of coating powders containing such materials, while such flake materials may be used in amounts of 0.05 phr or more, or 0.2 phr or more, or 1 phr or more.

To create a matte finish or appearance, powders may comprise waxes, PTFE, organophilic clays, and acid-functional acrylate (co)polymers in the amount of from 1 phr or more, or 2 phr or more, and up to 50 phr, or up to 20 phr, or up to 10 phr.

Melt flow aids, such as alkyl (meth)acrylate copolymers, and silicones, and mold-release agents may comprise 0.1 phr or more, or 0.5 phr or more, or 1 phr or more, and up to 4 phr, or up to 2.5 phr, or up to 1.5 phr in the powders of the present invention.

Leveling agents, e.g. benzoin (2-Hydroxy-1,2-diphenylethanone) and alkyl ethers and esters of benzoin, and light stabilizers, e.g. hindered amines and hindered phenols, may comprise from 0.1 to 4 phr, for example, 0.2 or more phr, in the powder compositions of the present invention. In addition, anticorrosives such as zinc phosphate and other metal phosphates may comprise amounts ranging up to 10 phr, for example, from 0.01 to 5 phr of the powder compositions of the present invention. Antioxidants, such as benzotriazole, may comprise amounts of from 0.1 to 1 phr of the powder compositions of the present invention.

Dry flow aids, such as fumed silica and alumina, and fumed silica treated with alkoxysilanes, may be added to coating powders in amounts of from 0.1 phr or more, or 0.5 phr or more, and up to 1.5 phr, or up to 1.0 phr.

Powder compositions of the present invention comprise a distribution of particles having an average particle size of from 5 to 120 $\mu$m, for example, 60 $\mu$m or less. Preferably, the powders of the present invention have an average particle size of 10 $\mu$m or more, or 15 $\mu$m or more, can have an average particle size of 35 $\mu$m or less, or, more preferably 25 $\mu$m or less. Powder compositions may be formed in any known manner such as, for example, by combining the one or more binder, and any additives except dry flow aids into an extruder or a melt mixer, following by drying, crushing and grinding to a desired particle size. Alternatively, an aqueous or solvent dispersion or suspension comprising binder and any additives except dry flow aids can be formed and spray dried. Dry flow aids should be post-blended into the product powder after it is formed, such as, for example, by simple mixing.

The powder compositions may be applied to substrates in any known manner, such as, for example, by electrostatic or triboelectric spray or fluidized bed coating. Alternatively, the powders can be formed into films by extrusion, in-mold coating or on-mold coating techniques, or by compressing the powders either underneath a heated membrane or platen and onto a substrate, or between heated membranes, platens or substrates.

The compositions of the present invention provide coatings for many substrates, including substrates to which known coatings have crazing problems or for which flexible coatings are desired. The powder compositions of the present invention may be applied to any metal, metal alloy, plastic, rubber, glass or wooden substrate, and fiber board or cement board. Suitable metal substrates may comprise steel, aluminum, pretreated steel, and pretreated aluminum, galvanized metal, magnesium alloys, tin plated steel, galvanized metal, aluminum, iron, and brass. Suitable cement board substrates may comprise fiber cement roof slates or roof tiles, asbestos shingles and masonite.

Examples of suitable substrates may include, for example, agricultural and construction equipment, vehicles and parts thereof; aluminum window frames; aluminum siding; machinery, pipes, small motors, hi-tensile steel coil springs, steel leaf springs, steel coil, cans, bottles; and automotive parts; sheet molded composites, laminated articles, molded articles, textiles, fibers, woven webs, outdoor furniture and sporting goods, electronics components, such as cell phones, laptops, portable and wireless devices, and components thereof. Preferably, the substrates may be architectural and automotive substrates, such as automotive trim and wheels, architectural aluminum substrates, and roof tiles.

Synthesis Example 1: Curing Agent Adduct Of A Linear Polyester With A Mixture Of Polyepoxy Compounds

A flexible epoxy functional cure agent adduct was formed by reacting a carboxyl terminated linear polyester reaction product of 1,6-hexanediol (HD) and 1,12-dodecanedioic acid (DDA) (contains an average of 5 repeat units of DDA and 4 repeat units of HD and has a carboxyl equiv wt. of 739) with a curing agent which is a blend of 76 wt.% diglycidyl terephthalate with 24 wt.% triglycidyl trimellitate (avg. no of epoxy groups= 2.24). The resulting adduct was a tough, waxy solid that displayed an ICI melt viscosity of 3,330 cps at 100 °C and a melting range from 40 °C to 80 °C. The adduct recrystallized rapidly at from 15 to 35 °C. Grinding of the adduct into a form suitable for formulating and extrusion required cooling with liquid nitrogen. This adduct should also be amenable to prill formation from the melt.

EXAMPLES 1-4: Coating Formulation and Performance

In each of the following Examples, the performance of a powder and a powder coating made therefrom was evaluated, as follows:

Film Thickness: Dry film thickness was measured using a POSITECTOR™ Model 6000-FN1 Coating Thickness Gauge from DeFelsko Corporation, Ogdensburg, NY, the film thickness on ferrous substrates measured according ASTM D 1186-01 TEST METHOD B - ELECTRONIC GAUGES "Standard Test Methods for Nondestructive Measurement of Dry Film Thickness of Nonmagnetic Coatings Applied to a Ferrous Base", 2001 and the film thickness on nonferrous substrates measured according ASTM D 1400-00 "Standard Test Method for Nondestructive Measurement of Dry Film Thickness of Nonconductive Coatings Applied to a Nonferrous Metal Base", 2000. Film thickness is reported as the range (low to high) of three readings measured in the center portion of the panel.

20° Gloss and 60° Gloss: The gloss of a cured coating was measured using a BYK-Gardner micro-TRI-gloss meter (Byk-Gardner USA, 9104 Guilford Road, Columbia, MD 21406 USA) according to ASTM D 523-89 "Standard Test Method for Specular Gloss" (Reapproved 1999). Gloss readings are reported as the average of three readings near the center of the specimen and are recorded at both the 20° geometry and the 60° geometry. A 60° gloss reading may be interpreted as follows: 0 -10: Very low gloss - textured finish or smooth matte finish; 10 - 30: Low gloss; 30 - 70: Mid gloss; 70+ High gloss. The 20° geometry is used for comparing specimens having 60° gloss values higher than 70.

Impact, direct and reverse: Direct and reverse impact resistance was measured according to ASTM D 2794-93 "Standard Test Method for Resistance of Organic Coatings to the Effects of Rapid Deformation (Impact)" (Reapproved 2004). This test measures the maximum force (dropping a 1.81 kg (four-pound) impacting weight onto a 12.7 mm diameter (5/8 inch) indenter to generate impact) withstood by the test coating panel without the appearance of cracking, the cracking inspection being done without magnification. Testing with the coated side up gives direct impact; coated side down gives reverse impact. A BYK-Gardner Impact Tester Model G1120 from BYK-Gardner USA, Columbia, MD, was used to obtain impact resistance measurements.

PCI Smoothness: Coating smoothness was determined visually by comparing the orange-peel (surface roughness) of the exemplified coatings to a set of coating smoothness standards, which are graded on a scale from 1-10 with 1 being the roughest surface and 10 being the smoothest. The coating smoothness standards are supplied by the Powder Coating Institute (PCI), Alexandria, VA.

Mandrel Bend: Coating flexibility (resistance to cracking) was determined according to ASTM D 522-93a TEST METHOD B - CYLINDRICAL MANDREL TEST "Standard Test Methods for Mandrel Bend of Attached Organic Coatings" (Reapproved 2001), using a BYK-Gardner Cylindrical Mandrel Set Model MG-1412 from BYK-Gardner USA, Columbia, MD.

Methyl Ethyl Ketone (MEK): Determines the degree of cure of a thermoset powder material when cured. A cotton-tipped applicator is saturated with MEK and rubbed a total of 50 double rubs back and forth across the surface of a test coating using approximately 2.6 cm strokes and 2-2.5 Kg of application pressure. One back and forth motion equals one double rub. The applicator shall remain saturated with MEK throughout the 50 double rubs. Coatings that display MEK resistance ratings from 4-5 are considered to have acceptable cure, physical properties and solvent resistance for most applications. The test panels are rated in Table 1, as follows:

TABLE 1

| MEK Resistance Rating | Degree of Cure | Comments |
|---|---|---|
| 5 | Excellent | No rub-off of coating or pigmentation. No softening or dulling of coating surface. |

(continued)

| MEK Resistance Rating | Degree of Cure | Comments |
|---|---|---|
| 4 | Very | Slight rub-off of coating or pigmentation. |
| 3 | Fair to Good | Moderate rub-off of coating or pigmentation. |
| 2 | Poor to Fair | Heavy rub-off of coating or pigmentation. |
| 1 | Very Poor to None | Extreme rub-off of coating or pigmentation, or complete rub through to substrate. |

Crack Crazing Resistance: In a method for determining the relative resistance to crazing of clear powder coatings when exposed to isopropyl alcohol, coating powder was applied to 76.2 mm x 152.4 mm x 0.60 mm (3 in. x 6 in. x 0.25 in.) bare aluminum Type A Q-Panels from Q-Lab Corporation, Cleveland, OH, and the panels were cured at appropriate conditions. Panels were bent 30 to 45 degrees from horizontal and isopropyl alcohol is applied on the coating at point of maximum curvature. Immediately thereafter, the treated area was observed for the formation of cracks. The point of reference for observing cracks was perpendicular to axis. One minute after the isopropyl alcohol is applied, the degree of cracking is observed and reported.

Powder Formulation: The coating powders of Examples 1-4, shown in Tables 2 and 3, below, were formulated by pre-blending the ingredients in a bag, followed by simple melt mixing of the ingredients in a 30 mm Baker Perkins twin screw extruder (Baker Perkins Inc., Grand Rapids, MI) at 400 RPM, 50% torque and a 71 °C barrel temperature setting. The resulting molten extruded mixture was fed through cooled chill-rolls to form a solid sheet that was subsequently granulated into chip form. Post blend (dry flow) additives, including, Aluminum Oxide, were mixed with the chips by shaking together in a plastic bag for 10 seconds. The post blend treated chips were then ground to a fine powder in a high speed Brinkman ZM1000 mill (Brinkmann, Haan, DE) equipped with a 12 pin rotor and 1.0 mm screen around the rotor, and then filtered through a 104$\mu$m (140 mesh) sieve for subsequent application to form coatings.

Powder Application: Each of the coating powders shown in Tables 2 and 3, below, was applied to 76.2 mm x 152.4 mm x 0.60 mm (3 in. x 6 in. x 0.25 in.) bare aluminum Type A Q-Panels. The coated panels were cured in a Blue M Model DC-20G2 electric hot air circulation oven (Lindberg/Blue M, Asheville, NC) for 15 minutes at 204°C in Examples 1-2 and at 190°C in Examples 3-4. The resulting coatings exhibited physical properties, as shown in Table 4, below:

<u>Example 1 (Comparative) and Example 2: Inclusion Of A Linear Polyester Adduct Of A Triglycidyl Isocyanurate Curing Agent In A Clear Coat Formulation</u>

TABLE 2 - Formulation

| EXAMPLE | **1** Comparative (weight parts) | **2** (weight parts) |
|---|---|---|
| Polyester of Isophthalic acid /Neopentyl glycol (T$_g$ 57,Acid No. 33) | 93 | 83 |
| Triglycidyl Isocyanurate (TGIC) | 7 | /// |
| TGIC adduct with linear polyester of 1,6-hexanediol and 1,12-dodecanedioic acid (Carboxyl Equiv wt. 739) | /// | 17 |
| Alkyl Acrylate (co)polymer Flow Modifier RESIFLOW™ PL-200[1] | 1.076 | 1.076 |
| Benzoin powder degassing aid | 0.8 | 0.8 |
| Phosphite Antioxidant | 0.5 | 0.5 |
| Optical Brightner | 0.002 | 0.002 |
| Hindered Amine Light Stabilizer | 0.547 | 0.547 |
| Triazine Light Absorber | 0.547 | 0.547 |
| Aluminum Oxide dry flow aid (post blend) | 0.2 wt.% | 0.2 wt.% |
| 1. Estron Chemical Inc., New York, NY | | |

Examples 3 (Comparative) and 4: Inclusion Of An Adjunct Curing Agent In A Clear Coat Formulation

TABLE 3- Formulation

| EXAMPLE | 3 (weight parts) | 4 (weight parts) |
|---|---|---|
| [1]Styrene/Methyl Methacrylate/Butyl Methacrylate/ Glycidyl Methacrylate PD7610 | 75.4 | 75.4 |
| [1]Styrene/Methyl Methacrylate/Butyl Methacrylate/ Glycidyl Methacrylate PD6300 | 24.6 | 24.6 |
| Sebacic Acid | 18.45 | 18.45 |
| Flexible Polyepoxy Adduct Of Linear Polyester Made In Synthesis Example 1 | 0.0 | 5.0 |
| [2]Alkyl Acrylate (co)polymer Flow Modifier RESIFLOW™ PL-200 | 1.076 | 1.076 |
| Benzoin powder Degassing Aid | 0.8 | 0.8 |
| [3]Phosphite Antioxidant IRGAFOS™ | 0.5 | 0.5 |
| Hindered Amine Light Stabilizer | 0.547 | 0.547 |
| Triazine Light Absorber | 0.547 | 0.547 |
| [4]Optical Brightener UVITEX™ OB | 0.002 | 0.002 |
| Fumed Aluminum Oxide Dry Flow Aid (postblend) | 0.2 wt.% | 0.2 wt.% |
| 1. Anderson Development Corp., Adrian, MI; 2. Estron Chemical Inc., New York, NY; 3 and 4. Ciba Specialty Chemicals, Inc., Tarrytown, NY | | |

TABLE 4 - Powder Coating Test Results

| EXAMPLE | 1 Comparative | 2 | 3 Comparative | 4 |
|---|---|---|---|---|
| Film Thickness ($\mu$m) | 50.0 -75.0 | 50.0 -75.0 | 50.0 -75.0 | 50.0 -75.0 |
| 20° Gloss | 111.0 | 85.0 | 107.0 | 104.0 |
| 60° Gloss | 124.0 | 111.0 | 128.0 | 112.0 |
| Impact, direct kg-m (in-Ib) | 1.84 (160) | 1.84 (160) | 0.69 (60) | 1.61 (140) |
| Impact, reverse kg-m (in-Ib) | 1.84(160) | 1.84(160) | 0(0) | 0.23 (20) |
| 3 mm (1/8") Mandrel bend | pass | pass | pass | pass |
| MEK (50 Rubs) | 5 | 5 | 5 | 5 |
| 165 Degree Craze cracking | Severe Crazing | Slight Crazing | No sign of crazing | No sign of crazing |

Example 2 demonstrates the improvement in craze cracking and a corresponding reduction in coating haze from incorporating a curing agent adduct of a linear polyester into a weatherable, superdurable polyester coating powder of Example 1.

Example 4 shows the improvement in chemical resistance, as shown by MEK resistance and impact strength, seen by incorporating a small amount of a polyepoxy curing agent adduct having an average of 2.24 epoxy groups per molecule into a clear coat powder formulation of Example 3.

**Claims**

1. A thermosetting polyester powder or epoxy-containing acrylic powder powder composition comprising one or more curing agent adduct of a polyester, wherein when the said curing agent adduct comprises an adduct of one or more polyepoxy compound, the said polyepoxy compound has an average of 2.01 or more epoxy groups per molecule, and,

further, wherein when the said curing agent adduct comprises the adduct of one or more polyepoxy compound chosen from triglycidyl isocyanurate (TGIC) and triglycidyl trimellitate, the said polyester is a carboxyl functional polyester having a carboxyl equivalent weight of 602 or more.

2. A powder composition as claimed in claim 1, further comprising one or more adjunct curing agent.

3. A powder composition as claimed in claim 2, wherein the said adjunct curing agent is a uretdione, glycoluril, a blocked polyisocyanate, or mixtures thereof.

4. A thermosetting polyester powder composition as claimed in claim 1, wherein the said polyester is a weatherable polyester comprising the reaction product of one or more polyacid comprising isophthalic acid (IPA) and one or more polyol.

5. A powder composition as claimed in claim 1, wherein the said curing agent adduct comprises a polyester adduct of one or more polyepoxy compound having an average of 2.5 or more epoxy groups per molecule.

6. A powder composition as claimed in claim 1, wherein the said polyester used to make the said curing agent adduct is a linear polyester.

7. A powder composition as claimed in claim 6, wherein the said linear polyester comprises the reaction product of a polyol with one or more linear $C_4$ to $C_{12}$ (cyclo)aliphatic dicarboxylic acid, anhydride or acid halide.

8. A powder coating, film or capstock made from the powder composition as claimed in claim 1.

9. A method of coating a substrate comprising
applying the powder composition as claimed in claim 1 to a substrate and curing.

10. A method as claimed in claim 9, wherein the said substrate is chosen from steel, aluminum, cement board, fiber board and magnesium alloy.

**EP 1 972 672 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6022927 A, Decker
- WO 9114745 A